# EUROPEAN PATENT APPLICATION

(11) **EP 3 816 591 A1**
(43) Date of publication of application: **05.05.2021**
(21) Application number: 19205527.5
(22) Date of filing: 28.10.2019
(51) Int. Cl.: G01F 23/26

(54) **CONTAINER DEVICE, VEHICLE**

(71) Applicant: Robert Bosch GmbH, 70442 Stuttgart (DE)
(72) Inventor: Malinowski, Mateusz, 55-093 Kietczów (PL)

(57) **Abstract**

The invention pertains to a container device (1), particularly brake fluid container device (1) for a vehicle, the container device (1) having a container (2) that comprises a fluid receiving volume (6) for receiving and supplying a fluid (7), and a capacitive sensor device (11) that comprises two electrode elements (12A,12B) that are disposed at least substantially in the receiving volume (6) in such a way that the electrode elements (12A,12B) form a capacitive unit (13) within the receiving volume (6). It is provided that the electrode elements (12A,12B) are disposed at different distances (15A,15) from a bottom (3) of the container (2), wherein a longitudinal extension (L) of at least an upper one (12A) of the electrode elements is at least substantially parallel to a fluid level (17) of a fluid (7) received in the receiving volume (6).

## Description

The invention pertains to a container device, particularly brake fluid container device for a vehicle, the container device having a container that comprises a fluid receiving volume for receiving and supplying a fluid, and a capacitive sensor device that comprises two electrode elements that are disposed at least substantially in the receiving volume in such a way that the electrode elements form a capacitive unit within the receiving volume.

Furthermore, the invention pertains to a vehicle comprising the container device described above.

### State of the art

Container devices of the type mentioned above are already known from the state of the art. For example, the laid-open publication DE 38 12 687 A1 discloses a brake fluid container device for a vehicle. The container device comprises a container having a fluid receiving volume for receiving and supplying a fluid, particularly a brake fluid. The container device further comprises a capacitive sensor device for monitoring the fluid received in the receiving volume. For this purpose, the sensor device comprises two electrode elements that are disposed at least substantially in the receiving volume in such a way that they form a capacitive unit or rather a capacitor within the receiving volume.

According to the laid-open publication DE 38 12 687 A1, the electrode elements are arranged within the receiving volume in such a way that a longitudinal extension of the electrode elements is perpendicular to a fluid level of the fluid received in the receiving volume. The capacitance of the capacitive unit thus gradually changes along with an increase or a decrease of the fluid level.

### Disclosure of the invention

The inventive container device with the features of claim 1 has the advantage that, due to the arrangement of the electrode elements, the sensor device can determine whether an amount of fluid disposed in the receiving volume is admissible or not especially reliably. According to the invention, the electrode elements are disposed at different distances from a bottom of the container and a longitudinal extension of at least an upper one of the electrode elements is at least substantially parallel to a fluid level of a fluid received in the receiving volume. The bottom of the container is understood to be the lowermost part of the container, when the container device is mounted to a vehicle as intended and the vehicle is standing or driving on a horizontal ground. Particularly, the bottom of the container is configured as a punctiform bottom, a bottom line or a bottom plane. The electrode elements are disposed at different distances from the bottom. Thus, a first one of the electrode elements, namely the upper electrode element, is arranged at a greater distance from the bottom than a second one of the electrode elements, namely a lower electrode element, thereby creating a gap between the electrode elements. At least the longitudinal extension of the upper electrode element is at least substantially parallel to the fluid level. This feature relates to the container device being mounted to the vehicle as intended as well. The fluid level is understood to be an upper fluid surface plane of the fluid that is received in the receiving volume. Due to the inventive arrangement of the electrode elements, changes in the volume of the fluid received in the receiving volume and thus the fluid level of the fluid do not affect the capacitance of the capacitive unit as long as the fluid level does not fall below the upper electrode element. Unless the fluid level falls below the upper electrode element, the gap between the electrode elements is filled with the fluid. However, if the fluid level falls below the upper electrode element the fluid is discharged from said gap effecting a sudden change in the capacitance of the capacitive unit. Said sudden change can be detected especially reliably for monitoring the amount of fluid received in the receiving volume by using a simple sensor or circuit arrangement or analysis unit. Preferably, the electrode elements are arranged such that the amount of fluid in the receiving volume is considered admissible when the fluid level does not fall below the upper electrode element, and inadmissible when the fluid level is below the upper electrode element.

According to a preferred embodiment, the electrode elements are plate-shaped. Thus, the electrode elements comprise an advantageously large surface area, correspondingly resulting in an advantageously large sudden change in the capacitance of the capacitive unit. Particularly the plate-shape of the electrode elements is circular, oval or rectangular.

Preferably, the electrode elements are oriented in parallel with each other. Thus, the longitudinal extension of the lower electrode element is at least substantially parallel to the fluid level - when used as intended - as well.

Preferably, the container comprises a circumferential side wall. According to a preferred embodiment, the electrode elements pass through said side wall. Thus, first parts of the electrode elements are disposed within the receiving volume to form the capacitive unit, and second parts of the electrode elements are disposed outside of the receiving volume. These second parts of the electrode elements are easily accessible for electrically contacting the electrode elements.

Preferably, the electrode elements are attached to the side wall. Thus, the electrode elements are hold in the desired arrangement by the side wall. As mentioned above, the electrode elements may pass through the side wall. In this case the side wall is especially suitably for holding the electrode elements. Preferably, the electrode elements are part of a structural component that can be detached and separately handled from the container.

According to a preferred embodiment, the longitudinal extension of the electrode elements is at least substantially perpendicular to the side wall. Thus, the side wall also extends perpendicular to the fluid level of the fluid in the receiving volume. In this case the electrode elements can be easily disposed in the desired orientation. According to another preferred embodiment, the side wall extends transverse with respect to the fluid level. In this case the longitudinal extension of the electrode elements is transverse to the side wall accordingly. However, the container preferably has an at least generally cylindrical shape, whereby the container comprises a bottom plane and the side wall is preferably at least substantially perpendicular to said bottom plane.

Preferably, the electrode elements lie directly above each other. Thus, an area of the electrode elements in which the electrode elements constitute the capacitive unit is advantageously large. Preferably, the electrode elements comprise the same outer contour, such that the lower electrode element is completely covered by the upper electrode element lying directly above the lower electrode element, when seen from above.

According to a preferred embodiment, the electrode elements are disposed such that a distance between the electrode elements is between 5 and 20 mm. The gap between the electrode elements is then sufficiently large such that the gap is reliably filled and emptied depending on the fluid level of the fluid disposed in the receiving volume. Furthermore, due to said distance the change in capacitance is sufficiently sudden if the fluid level falls below the upper electrode element. Preferably, the distance is between 8 and 12 mm. Particularly preferred, the distance is 10 mm. Preferably, the distance between the electrode elements relates to a distance between an upper end of the lower electrode element and a lower end of the upper electrode element.

Preferably, at least one of the electrode elements is covered at least in regions by a protective plastic layer. Advantageously, at least the first parts of the electrodes, namely the parts disposed in the receiving volume, are covered by respective protective plastic layers. Thus, the plastic layers prevents a current flow from one of the electrode elements through the fluid disposed in the receiving volume and to the other of the electrode elements.

According to a preferred embodiment, the side wall comprises at least one protrusion extending into the receiving volume, wherein one of the electrode elements is disposed inside the protrusion. Thus, a direct contact between the fluid received in the receiving volume and the electrode element or the plastic layer covering the electrode element is prevented. Rather, the electrode element is separated from the receiving volume or a fluid received in the receiving volume by means of said protrusion. Thus, a sealing device for sealing a site at which the electrode element passes through the side wall is not required. Preferably, the side wall comprises a respective protrusion for each of the electrode elements. When the upper electrode element is disposed inside the protrusion, the sudden change in the capacitance is effected when the fluid level falls below a lower end of the protrusion.

Preferably, the side wall comprises at least one through hole, wherein at least one of the electrode elements reaches through said through hole and protrudes directly into the receiving volume. Thus, the first part of the electrode element or the plastic layer covering said first part is in direct contact with the fluid, when the fluid level exceeds said electrode element. In this embodiment, the container device preferably comprises a sealing device that acts between the electrode element and the through hole and prevents leakage of the fluid off the receiving volume. Preferably, according to this embodiment, the side wall is configured protrusion-free. Thus, the distance between the electrode elements can be reduced, compared to provision of at least one protrusion extending into the receiving volume and housing one of the electrode elements.

According to a preferred embodiment, the sensor device comprises an analysis unit that is electrically connected to the electrode elements and configured to determine whether the level of the fluid received in the receiving volume is admissible or not. Thus, the sensor device is configured as a binary on-off type sensor device. Preferably, the analysis unit is configured to determine whether the level of the fluid is admissible or not depending on a change of the capacitance of the capacitive unit.

Preferably, the container comprises an inlet opening that is provided at a greater distance from the bottom of the container than the upper electrode element. Thus, when the container device is mounted to the vehicle as intended, the receiving volume can be filled with the fluid via the inlet opening to such an extent that the fluid level exceeds the upper electrode.

The inventive vehicle with the features of claim 14 is characterized by the inventive container device. This results in the advantages already mentioned above. Further preferred features and feature combinations result in particular from the previously described as well as from the claims.

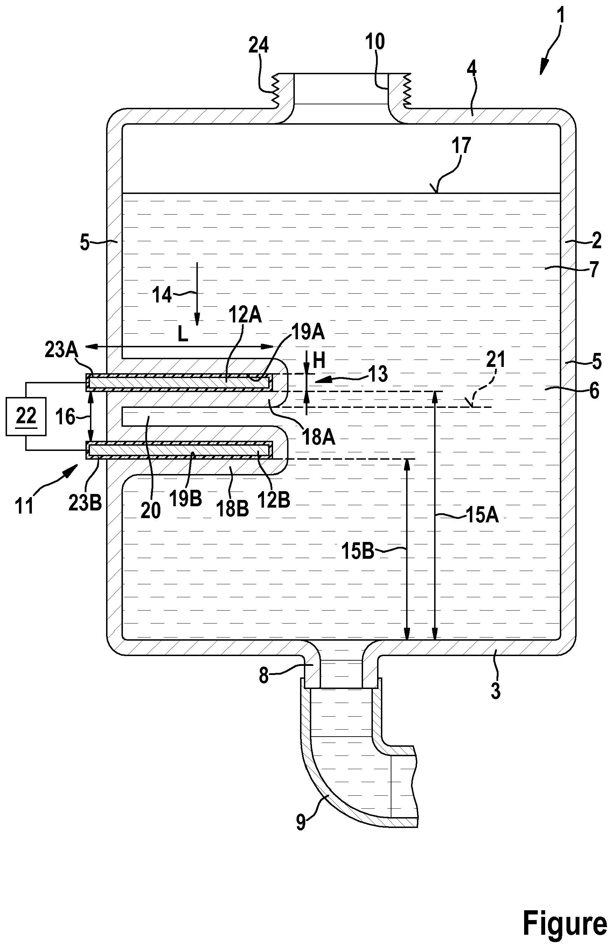

In the following, the invention will be explained in more detail using the drawing. For this purpose, the only
- Figure: shows a sectional view of a container device.

The only figure shows a sectional view of a container device 1 of a vehicle. The container device 1 is configured as a brake fluid container device 1 of the vehicle. The container device 1 comprises a container 2. The container 2 comprises a bottom 3, a top 4 and a circumferential side wall 5 that define a fluid receiving volume 6 of the container 2. The bottom 3 constitutes the lowermost part of the container 2, when the container device 1 is mounted to the vehicle as intended. Accordingly, the top 4 constitutes the uppermost part of the container 2. According to the figure, the bottom 3 and the top 4 are aligned at least substantially in parallel with each other and the side wall 5 extends between the bottom 3 and the top 4. Thus, according to the figure, the container 2 is cylindrical in shape. However, the present teachings are not limited to a container being cylindrical in shape. Rather, the present teachings may be applied to container devices, particularly brake fluid container devices, of any common shape.

A fluid 7, namely a brake fluid 7, is disposed in the receiving volume 6. The bottom 3 comprises an outlet opening 8 that is configured as a connection nozzle 8. The receiving volume 6 is fluidically connected to a master brake cylinder (not shown) of the vehicle via a pipe 9 that is placed upon the connection nozzle 8. Via the outlet opening 8 and the pipe 9, the fluid 7 can be supplied to the master brake cylinder.

The top 4 comprises an inlet opening 10 via which the fluid can be filled into the receiving volume 6. According to the figure, the top 4 comprises a screw thread 24 by means of which a screw cap (not shown) can be attached to the top 4 in order to close the inlet opening 10.

The side wall 5 comprises two protrusions 18A, 18B that extend into the receiving volume 6. Said protrusions 18A, 18B each have a respective cavity 19A or 19B that is open to an exterior of the container 2.

The container device 1 further comprises a capacitive sensor device 11. The sensor device 11 comprises two electrode elements 12A, 12B. The electrode elements 12A, 12B are made of an electrically conductive material such as copper, for example. The electrode elements 12A, 12B each pass through the side wall 5 and reach into the cavities 19A or 19B of said protrusions 18A, 18B. Since the electrode elements 12A, 12B pass through the side wall 5, at least parts of the electrode elements 12A, 12B are disposed within the receiving volume 6. However, being disposed within the cavities 19A or 19B, the electrode elements 12A, 12B are separated from the fluid 7 by means of the protrusions 18A or 18B.

The electrode elements 12A, 12B are arranged relative to each other in such a way that they form a capacitive unit 13 or that is to say a capacitor within the receiving volume 6. For this purpose, the electrode elements 12A, 12B are aligned in parallel with each other. A capacitance of said capacitive unit 13 is influenced by a medium that is disposed in a gap 20 that is formed between the protrusions 18A, 18B. For example, the capacitance of the capacitive unit 13 is higher if the gap 20 is filled with the brake fluid 7, compared with the gap 20 being filled with air.

The electrode elements 12A, 12B are plate-shaped. Thus, a longitudinal extension L of the electrode elements 12A, 12B is considerably larger than a height H of the electrode elements 12A, 12B. If seen from above or rather along the line of sight indicated by the arrow 14, the plate-shaped electrode elements 12A, 12B comprise a rectangular outer contour.

The electrode elements 12A, 12B are disposed such that they differ with respect to their distance from the bottom 3. An upper one 12A of the electrode elements is disposed at a first distance 15A from the bottom 3. A lower one 12B of the electrode elements is disposed at a second distance 15B from the bottom 3. The second distance 15B is smaller than the first distance 15A. According to the figure, the first distance 15A and the second distance 15B differ such that a difference 16 between a lower end of the upper electrode 12A and an upper end of the lower electrode 12B is 10 mm.

The electrode elements 12A, 12B are arranged such that the longitudinal extensions L of the electrode elements 12A, 12B are parallel to a fluid level 17 of the fluid 7. Thus, changes in the amount of fluid 7 received in the receiving volume 6 do not affect the capacitance of the capacitive unit 13 as long as the fluid level 17 exceeds a possible fluid level 21. A distance of said possible fluid level 21 from the bottom 3 equals a distance of an upper end of said gap 20 from the bottom 3. However, if the fluid level 17 falls below the possible fluid level 21, the fluid 6 is discharged from the gap 20 and replaced with air. Thus, if the fluid level 17 falls below the possible fluid level 21, this effects a sudden change in the capacitance of the capacitive unit 13.

The sensor device 11 further comprises an analysis unit 22. The analysis unit 22 is electrically connected to the electrode elements 12A, 12B and configured to determine whether the fluid level 17 of the fluid 7 received in the receiving volume 6 is admissible or not. For this purpose, the analysis unit 22 is configured to monitor the capacitance of the capacitive unit 13. If the fluid level 17 exceeds the possible fluid level 21, the analysis unit 22 detects that the capacitance is high and the fluid level 17 is admissible. However, if the fluid level 17 is below the possible fluid level 21, the analysis unit 22 detects that the capacitance is low and the fluid level 17 is inadmissible. In the latter case, the sensor device 11 preferably provides a warning signal for a user of the vehicle.

The electrode elements 12A, 12B are each covered by a respective protective plastic layer 23A, 23B, particularly for electric isolation of the electrode elements 12A, 12B. The sensor device 11 comprises a respective electrical line 24A, 24B for each of the electrode elements 12A, 12B. The electrical lines 24A, 24B pass through the plastic layer 23A or 23B for electrical connection of the electrode elements 12A, 12B with the analysis unit 22.

## Claims

1. Container device, particularly brake fluid container device for a vehicle, comprising:
a container (2) that comprises a fluid receiving volume (6) for receiving and supplying a fluid (7), and
a capacitive sensor (11) device that comprises two electrode elements (12A,12B) that are disposed at least substantially in the receiving volume (6) in such a way that the electrode elements (12A,12B) form a capacitive unit (13) within the receiving volume (6),
**characterized in that** the electrode elements (12A,12B) are disposed at different distances (15A,15B) from a bottom (3) of the container (2), and wherein a longitudinal extension (L) of at least an upper one (12A) of the electrode elements is at least substantially parallel to a fluid level (17) of a fluid (7) received in the receiving volume (6).

2. Container device according to claim 1, **characterized in that** the electrode elements (12A,12N) are plate-shaped.

3. Container device according to any of the preceding claims, **characterized in that,** the electrode elements (12A,12B) are oriented in parallel with each other.

4. Container device according to any of the preceding claims, **characterized in that** the container (2) comprises a circumferential side wall (5), wherein the electrode elements (12A,12B) pass through the side wall (5).

5. Container device according to any of the preceding claims, **characterized in that** the electrode elements (12A,12B) are attached to the side wall (5).

6. Container device according to any of the preceding claims, **characterized in that** the longitudinal extension (L) of the electrode elements (12A,12B) is at least substantially perpendicular to the side wall (5).

7. Container device according to any of the preceding claims, **characterized in that** the electrode elements (12A,12B) lie directly above each other.

8. Container device according to any of the preceding claims, **characterized in that** the electrode elements (12A,12B) are disposed such that a distance (16) between the electrode elements (12A,12B) is between 5 and 20 mm, preferably 8 and 12 mm, particularly preferred 10 mm.

9. Container device according to any of the preceding claims, **characterized in that** at least one of the electrode elements (12A,12B) is covered at least in regions by a protective plastic layer (23A,23B).

10. Container device according to any of the preceding claims, **characterized in that** the side wall (5) comprises at least one protrusion (18A,18B) extending into the receiving volume (6), wherein one of the electrode elements (12A,12B) is disposed inside the protrusion (18A,18B).

11. Container device according to any of the preceding claims, **characterized in that** the side wall (5) comprises at least one through hole, wherein at least one of the electrode elements (12A,12B) reaches through said through hole and protrudes directly into the receiving volume (6).

12. Container device according to any of the preceding claims, **characterized in that** the sensor device (11) comprises an analysis unit (22) that is electrically connected to the electrode elements (12A,12B) and configured to determine whether the level (17) of the fluid (7) received in the receiving volume (6) is admissible or not.

13. Container device according to any of the preceding claims, **characterized in that** the container (2) comprises an inlet opening (10) that is provided at a greater distance from the bottom (2) of the container than the upper electrode element (12A).

14. Vehicle, **characterized by** a container device (1) according to any of claims 1 to 13.
